# EUROPÄISCHE PATENTSCHRIFT

(11) **EP 0 422 601 B1**
(45) Veröffentlichungstag und Bekanntmachung des Hinweises auf die Patenterteilung: **22.02.1995**
(21) Anmeldenummer: 90119384.7
(22) Anmeldetag: 10.10.1990
(51) Int. Cl.: G01N 3/10

(54) **Prüfeinrichtung zur Ermittlung des Verhaltens von granularem Material unter triaxialer Belastung**
Testing device for detecting the behaviour of granular material under triaxial charge
Dispositif d'essai pour détecter le comportement de matériau granulaire sous charge triaxiale

(30) Priorität: 13.10.1989 DE 3934235
(43) Veröffentlichungstag der Anmeldung: 17.04.1991
(73) Patentinhaber: KERNFORSCHUNGSZENTRUM KARLSRUHE GMBH, D-76021 Karlsruhe (DE)
(72) Erfinder: Korthaus, Ekkehard, Dr., W-7500 Karlsruhe (DE); Schwarkopf, Werner, W-7514 Leopoldshafen (DE)

(56) Entgegenhaltungen:
- FR-A- 2 641 868
- US-A- 3 423 994
- US-A- 4 607 532
- SOVIET INVENTIONS ILLUSTRATED, week B49, 23. Januar 1980, accession no. L3975B/49, Derwent Publications Ltd, London, GB ; & SU-A-653 534
- SOVIET INVENTIONS ILLUSTRATED, week C29, 27. August 1980, accession no. G3253C/29, Derwent Publications Ltd, London, GB ; & SU-A-700 838

## Beschreibung

Die Erfindung betrifft eine Prüfeinrichtung zur Ermittlung des Verhaltens von granularem Material unter triaxialer Belastung gemäß dem Oberbegriff von Anspruch 1.

Unter granularem Material soll in diesem Zusammenhang Salzgrus aus Salzlagerstätten, körniges mineralisches Material wie Tonablagerungen, Erde oder ähnliches verstanden werden.

Beim Ausheben von Gruben, beim Abteufen von Schächten oder beim Anlegen von Kavernen in solchem Material wirken in verschiedenen Raumrichtungen unterschiedliche Kräfte. Der Druck des Deckgesteins führt dazu, daß sich das Material plastisch oder durch Kriechen verformt und im Verlauf kürzerer oder längerer Zeiten angelegte Hohlräume wieder verfüllt.

Eine solche Prüfeinrichtung ist aus der Veröffentlichung SOVIET INVENTIONS ILLUSTRATED, WEEK c29, 27. August 1980, accession no. G 3253C/29, Derwent Publications Ltd., London, GB & Su-A-700 838 (MOSC.ENG CONST INST), 30. Nov. 1979 bekannt. Diese Prüfeinrichtung weist einen kubischen Innenraum auf. Die Wandflächen enthalten Ausnehmungen, die durch ein flexibles Element verschlossen sind, so daß Hohlräume entstehen. In die Hohlräume münden Anschlüsse für ein Druckmedium.

Eine weitere Prüfeinrichtung ist aus der Veröffentlichung "Laboratory Investigation of Crushed Salt; Consolidation and Fracture Healing", Technical Report BMI/ONWI-631, January 1987, IT Corporation, prepared for Office of Nuclear Waste Isolation, Battelle Memorial Institute, USA, bekannt.

Diese Vorrichtung besteht aus einem zylindrischen Behälter, dessen Mantelfläche aus einer Membran gebildet wird und der die Probe aufnimmt. Der Behälter ist von Öl umgeben, das mit Hilfe eines mechanisch betriebenen Kolbens unter Druck gesetzt werden kann. Die Kreisflächen des Behälters können davon unabhängig mit Druck beaufschlagt werden.

Eine ähnlich wirkende Vorrichtung ist in der Veröffentlichung von D.J. Holcomb und M. Shields mit dem Titel "Hydrostatic Creep Consolidation of Crushed Salt With Added Water", Sandia Report Sand 87-1990 UC-70, Oktober 1987 der Sandia National Laboratories, USA, beschrieben.

Diese Vorrichtungen weisen den Nachteil auf, daß der Druck nur entlang von zwei verschiedenen Raumrichtungen unterschiedlich gewählt werden kann. Eine Vorverdichtung der Proben in der Apparatur ist nur unter Schwierigkeiten möglich, weil die elastische Mantelfläche des Probenbehälters einem Vorverdichtungsdruck ausweicht. Eine allseitig gleichmäßige Probentemperatur läßt sich nur schwer einstellen.

Aufgabe der Erfindung ist, eine weitere Prüfeinrichtung der eingangs genannten Art vorzuschlagen, mit der das Kompaktierungs- und Verformungsverhalten von granularem Material, insbesondere das zeitabhängige Kriechverhalten, unter triaxialer Belastung ermittelt werden kann. Die Prüfeinrichtung soll es ermöglichen, in allen drei Raumrichtungen unterschiedliche Drücke auszuüben. Ferner soll die Prüfeinrichtung so einfach und kompakt aufgebaut sein, daß sie ggf. auf die in den zu untersuchenden Bodenschichten herrschenden Temperaturen aufheizbar ist.

Die Prüfeinrichtung soll so aufgebaut sein, daß die Proben in ihr noch vor der Untersuchung mechanisch vorverdichtet werden können. Sie soll sich insbesondere für hohe Drücke eignen.

Die Aufgabe wird erfindungsgemäß durch eine Prüfeinrichtung mit den im Kennzeichen des Hauptanspruchs aufgeführten Merkmalen gelöst.

Die Unteransprüche geben vorteilhafte Ausgestaltungen der erfindungsgemäßen Prüfeinrichtung an.

Erfindungsgemäß wird eine Prüfeinrichtung für granulares Material vorgeschlagen, bei der das granulare Material in allen drei Raumrichtungen einem jeweils unterschiedlichen Druck ausgesetzt werden kann. Mit der erfindungsgemäßen Prüfeinrichtung lassen sich sowohl die Verformung des granularen Materials als Funktion des Drucks als auch der Druck in Abhängigkeit von der Verformung bestimmen. Der Druckaufbau im granularen Material erfolgt mit Hilfe von sechs Druckkissen, die sich unter Druck aufblähen lassen, wobei jeweils zwei gegenüberliegende Druckkissen an dieselbe Druckquelle angeschlossen sind.

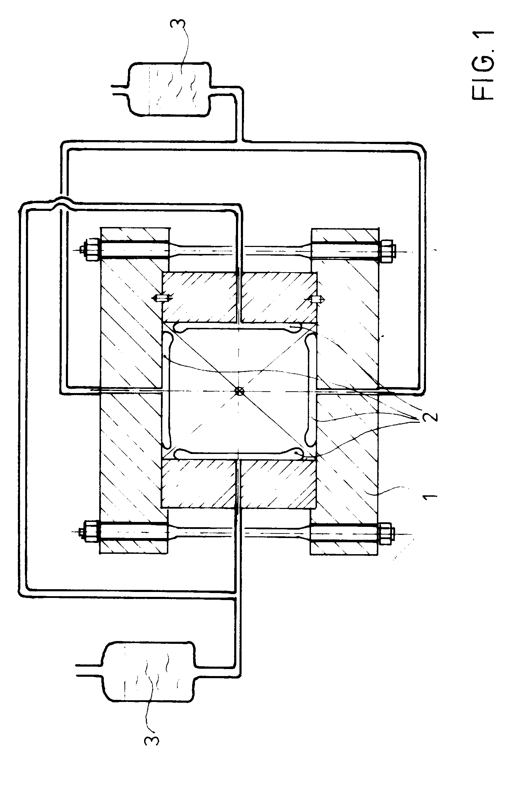

Fig. 1 zeigt eine Ausführungsform der erfindungsgemäßen Prüfeinrichtung.
Fig. 2 zeigt eine vorteilhafte Ausgestaltung des Druckgefäßes.
In Fig. 3 sind ein Druckkissen und ein quadratisches Flächenelement dargestellt.
In Fig. 4 ist ein besonders bevorzugtes Flächenelement wiedergegeben.

Die Prüfeinrichtung besteht im wesentlichen aus dem Druckgefäß 1, den sechs Druckkissen 2 und einer Vorrichtung 3, mit der der Innenraum der Druckkissen 2 mit Druck beaufschlagt werden kann.

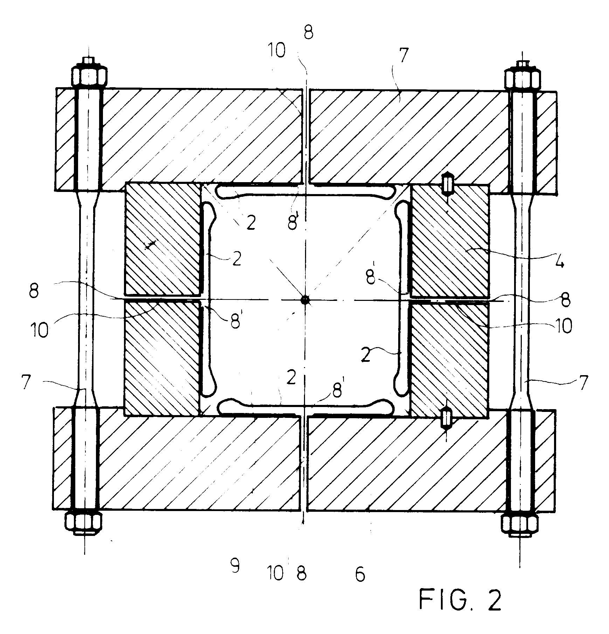

Das Druckgefäß kann in der in Fig. 2 dargestellten Weise konstruiert werden. Es besteht aus einem Joch 4 sowie aus einer Deckplatte 5 und einer Grundplatte 6, die durch Dehnungsschrauben 7 miteinander verbunden sind. Das Joch weist auf jeder Seite eine Durchbohrung 8 auf.

Ebenso sind die Grund- und die Deckplatte durchbohrt. Diese Bohrungen 8 können prinzipiell zu jeder Stelle im Innenbereich der jeweiligen Innenwand des kubischen Innenraums führen. Es ist jedoch zu beachten, daß die Druckkissen 2 so an den Innenwänden des kubischen Innenraums 9 angebracht werden müssen, daß deren Bohrungen 8′ auf den Bohrungen 8 des Druckgefäßes zu liegen kommen. Man wird deshalb die Bohrungen im Druckgefäß so anbringen, daß nur eine Art von Druckkissen verwendet werden muß. Besonders bevorzugt ist eine Ausführungsform, bei der die Bohrungen sowohl an der Innenwand des kubischen Innenraums als auch des Druckkissens jeweils im Flächenmittelpunkt liegen. Dann ist einerseits ein einziger Typ von Druckkissen ausreichend, andererseits müssen die Druckkissen nicht in vorgegebener Weise an der Innenwand positioniert werden.

In welcher Weise die Bohrkanäle 10 im Druckgefäß von der Innenwand zur Außenfläche verlaufen, ist von untergeordneter Bedeutung. Aus Platzgründen wird man zur Innenwandfläche senkrechte Bohrungen vorziehen.

Die sechs Druckkissen 2 werden so an den sechs Wandflächen des kubischen Innenraums angebracht, daß ihre Bohrungen 8′ mit den Bohrungen 8 dieser Wandflächen fluchten. Aus den oben angegebenen Gründen liegen die Bohrungen vorzugsweise im Flächenmittelpunkt. Die Druckkissen sind im wesentlichen quadratisch, weisen aber abgeschrägte oder abgerundete Ecken auf. Die Quadratseitenlänge a′ (also die Seitenlänge eines entsprechenden Quadrats ohne abgeschrägte oder abgerundete Ecken) muß etwas kleiner sein als die Kantenlänge a des kubischen Innenraums. Die Differenz (a - a′) hängt von der Konstruktion der Druckkissen, insbesondere vom Maß der Abrundung bzw. Abschrägung an den Ecken und von dem Maß ab, das die Druckkissen unter Druck annehmen. Durch den während der Messung auf die Innenräume der Druckkissen wirkenden Druck dehnen sich die Druckkissen aus. Wesentlich für die Bemessung der Quadratseitenlänge a′ und des Rundungsgrads der Ecken ist, daß sich die sechs Druckkissen während der Messung zu keiner Zeit, somit also weder im drucklosen Zustand noch unter Druck, an ihren Ecken berühren und aneinander reiben, denn sonst würde die von einem Druckkissen ausgehende Kraft nicht allein auf das granulare Material, sondern auch auf benachbarte Druckkissen ausgeübt. Dies hätte fehlerhafte Messungen zur Folge. Das Maß von a′ wird so gewählt, daß die oben genannnten Bedingungen erfüllt sind.

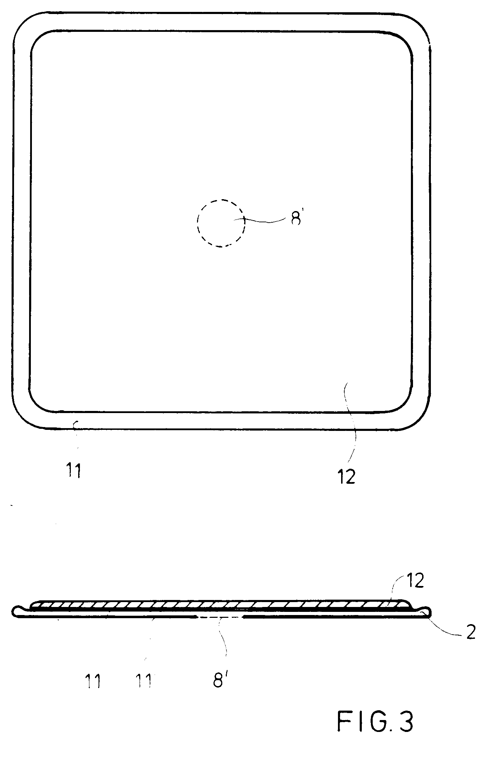

Jedes Druckkissen besteht gemäß Fig. 3 aus zwei Platten 11, 11′, von denen eine 11′ in der oben diskutierten Weise durchbohrt ist und die an ihrem Umfang miteinander verbunden sind.

Die Verbindungsstelle kann in Form eines Dehnfalzes o. ä. ausgeführt sein. Unter Druck soll die nicht durchbohrte Platte möglichst eben bleiben.

Die Auswölbung der Seitenflächen der Druckkissen unter Druck stört dagegen nicht, sondern ist im Gegenteil vorteilhaft. Die Seitenflächen nehmen unter Druck eine halbrohrähnliche Form an, wobei die Wölbung den freien Raum zwischen den Druckkissen ausfüllt.

Vorzugsweise bestehen die Druckkissen aus dünnen Blechen eines zähen Stahls (z. B. V2A) oder aus Kupfer. Die Blechdicke wird so gewählt, daß der maximal auftretende Druck gehalten wird; im übrigen soll sie so klein wie möglich gewählt werden.

Für relativ geringe anzuwendende Drücke können jedoch auch faserverstärkte Kunststoffe oder ähnliche flexible Materialien vorgesehen werden.

Die Bohrungen der Druckkissen fluchten mit den Bohrungen in den Wandflächen des kubischen Innenraums, wobei diese beiden Bohrungen gegeneinander abgedichtet werden müssen. Zur Abdichtung können die üblichen Methoden angewandt werden. Z. B. können O-Ringe, die die Bohrungen in den Wandflächen des kubischen Innenraums umschließen, verwendet werden. Es kann jedoch auch ein geeignetes zähes Klebermaterial um die Bohrungen herum aufgebracht werden. Unter steigendem Druck wird bei mit granularem Material befülltem Innenraum die durchbohrte Platte des Druckkissens in zunehmendem Maß auf die Wandfläche des kubischen Innenraums gepreßt, wodurch die Abdichtung wirkungsvoll unterstützt wird.

Jeweils zwei gegenüberliegende Druckkissen stehen mit einer Vorrichtung 3 in Verbindung, mit deren Hilfe ein Medium unter Druck zwischen die Platten der Druckkissen eingepreßt werden kann.

Eine solche Vorrichtung kann ein Druckgasreservoir, beispielsweise eine Druckgasflasche darstellen.

Bevorzugt wird jedoch die Erzeugung von hydraulischem Druck.

Beispielsweise können durchflußanzeigende Kolbenpumpen verwendet werden, die eine Messung der Menge der einströmenden Hydraulikflüssigkeit zulassen. Einfacher und genauer kann die zugeführte Flüssigkeitsmenge gemessen werden, wenn jeweils zwei gegenüberliegende Druckkissen mit einem mit Hydraulikflüssigkeit gefüllten Behälter in Verbindung stehen, der mit einer kalibrierten Füllstandsmeßanzeige ausgerüstet ist. Die Menge der verbrauchten Hydraulikflüssigkeit entspricht der den Druckkissen zugeführten Flüssigkeitsmenge.

Der Druck wird in üblicher Weise mit Manometern gemessen.

Die Druckkissen werden nach jeder Messung ausgetauscht, sofern sie plastisch deformiert sind.

Die erfindungsgemäße Vorrichtung kann in an sich bekannter Weise, z. B. durch ein Tauchbad, beheizt werden. Die Beheizung ist dann wichtig, wenn das Verhalten von tiefen Untergrundschichten, in denen Temperaturen von 200° C und mehr herrschen, unter triaxialer Belastung realitätsnah untersucht werden soll. Aus dem gleichen Grund ist die erfindungsgemäße Prüfvorrichtung so konstruiert, daß bei geeigneter Wahl des Materials der Druckkissen und der Dimensionierung des Druckgefäßes Drücke im Bereich von 400 bar ausgeübt werden können.

Je nach Konstruktion der Druckkissen und des verwendeten Materials wird die Form der nicht durchbohrten Platte 11 unter Druck und bei mit dem granularen Material befüllten Innenraum von der ebenen Form abweichen und sich in den kubischen Innenraum hineinwölben.

Hierdurch kann sich ein Meßfehler ergeben. Unter Umständen sind die Meßwerte nur schwer interpretierbar. Bei starker Abweichung von der ebenen Form wird deshalb auf die nicht durchbohrte Quadratfläche 11 des Druckkissens vor der Messung ein geeignetes Flächenelement 12 aufgelegt und z. B. durch Ankleben fixiert.

Dieses Flächenelement 12 besteht bevorzugt aus einer Platte aus hartem Stahl, die ggf. durch Versteifungselemente gegen Durchbiegen verstärkt ist. Das Flächenelement hat eine quadratische Form mit abgerundeten Ecken und einer Quadratseitenlänge a˝, die geringfügig kleiner ist als die Quadratseitenlänge a′ der Druckkissen. Das Maß für a˝ wird (ebenso wie das Maß für a′) so gewählt, daß sich die Flächenelemente unter Druck nicht berühren. Diese Bedingung muß auch durch die Art der Fixierung auf dem Druckkissen eingehalten werden; die Flächenelemente werden daher symmetrisch auf den Druckkissen fixiert.

Ein gewisser Nachteil dieser Flächenelemente 12 besteht darin, daß mit entsprechend stark dimensionierten Flächenelementen, die kein Durchbiegen zulassen, zwar eine weitgehend ebene Verformung des granularen Materials erzielt wird, daß jedoch der angewandte Druck wegen der Wandeffekte (Wandreibung) nicht an allen Stellen gleich groß ist.

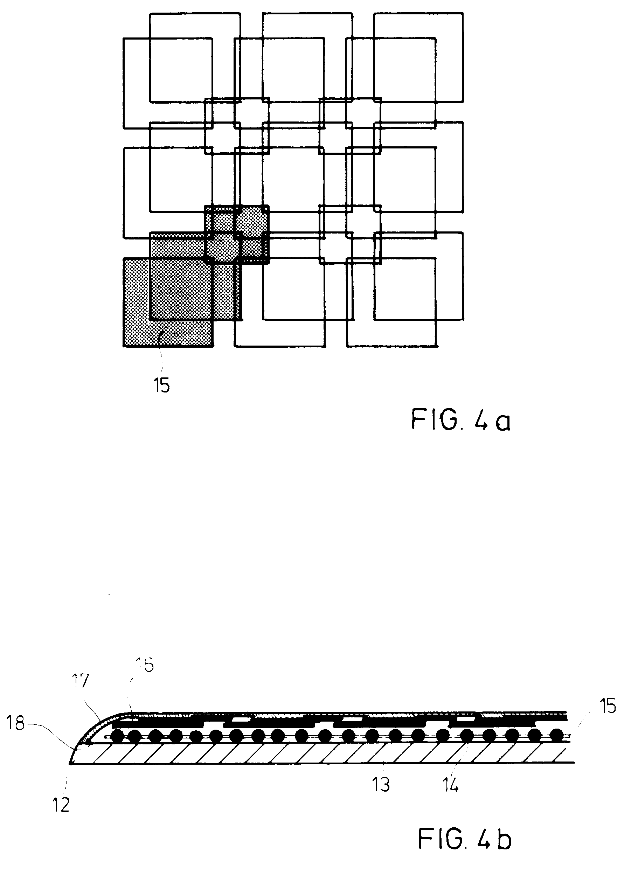

Dieser Nachteil kann für genauere Messungen durch ein eigens konstruiertes Flächenelement 12′ vermieden werden (Fig. 4a, 4b).

Ein solches Flächenelement besteht aus einer Deckplatte 13 aus hartem Stahl, auf der eine Lage von Kugellagerkugeln 14 aufgebracht ist. Die Kugellagerkugeln können sind in einer käfigartigen Matrix 15 aus Gummi oder gummiähnlichem Material angeordnet und auf der Deckplatte 13 abrollen. Auf den Kugellagerkugeln liegt eine Anzahl von Teilelementen 16 auf, die einander dachziegelartig überdecken und überlappen. Diese Teilelemente 16 sind auf der Schicht der Kugellagerkugeln 14 verschiebbar. Die Kugellagerkugeln und die Teilelemente sind durch eine elastische Schicht 17 abgedeckt, die an den Rändern der Deckplatte 18 fixiert ist.

Die Abdeckschicht 17 dient gleichzeitig dazu, die Teilelemente 16 in der Ausgangslage relativ zueinander definiert zu positionieren.

Dieses Flächenelement 12′ wird mit seiner Deckplatte 13 auf das Druckkissen 2 aufgelegt.

Die elastische Schicht 16 steht mit dem granularen Material in Verbindung. Wenn durch steigenden Druck in den Druckkissen das granulare Material zusammengepreßt wird und sich demzufolge relativ zu dem Flächenelement verschiebt, verschieben sich die Teilelemente des Flächenelements ebenfalls, wobei die darüberliegende Schicht 16 gedehnt oder gestaucht wird. Ein bestimmtes Teilchen des granularen Materials wandert daher zwar relativ zum Flächenelement, nicht jedoch relativ zu der abdeckenden elastischen Schicht. Anstelle der Reibung dieses Teilchens an einer starren Wand, die eine hohe Kraft erfordert, bleibt es relativ zu der elastischen Wand 16 des Flächenelements 12′ in Ruhe. Die Verschiebung wird durch die sich überlappenden Teilelemente auf den Kugellagerkugeln aufgenommen. Diese Verschiebung erfordert eine weit geringere Kraft.

Hierdurch wird die Messung insbesondere bei einem hohen Verformungsgrad des granularen Materials wesentlich weniger durch Wandeffekte beeinflußt als mit einem starren Flächenelement.

### Bezugszeichenliste

- 1: Druckgefäß
- 2: Druckkissen
- 3: Druckquelle
- 4: Joch
- 5: Deckplatte
- 6: Grundplatte
- 7: Dehnungsschrauben
- 8: Bohrung Druckgefäß
- 8′: Bohrung Druckkissen
- 9: kubischer Innenraum
- 10: Bohrkanäle
- 11: nicht durchbohrte Platte des Druckkissens
- 11′: durchbohrte Platte des Druckkissens
- 12: plattenförmiges Flächenelement
- 12′: Gleitflächenelement
- 13: Deckplatte des Gleitflächenelements
- 14: Kugellagerkugeln
- 14: Matrix-Schicht
- 16: Teilelemente
- 17: elastische Schicht
- 18: Ränder der Deckplatte 13

## Patentansprüche

1. Prüfeinrichtung zur Ermittlung des Verhaltens von granularem Material unter triaxialer Belastung, bei der das granulare Material in verschiedenen Raumrichtungen unterschiedlichen Drücken ausgesetzt ist, mit
a) einem zerlegbaren Druckgefäß (1) mit kubischem Innenraum (9) der Kantenlänge a und sechs Bohrungen (8), die jeweils von einem Punkt im Innenbereich der Wandflächen des kubischen Innenraums zur Außenfläche des Druckgefäßes (1) führen;
gekennzeichnet durch
b) sechs Druckkissen (2), bestehend aus zwei übereinanderliegenden quadratischen mit abgerundeten Ecken versehenen Platten (11, 11') aus einem elastisch-plastisch verformbaren Material mit einer Quadratseitenlänge a', die geringfügig kleiner ist als die Kantenlänge a;
b1) eine der beiden Platten (11') enthält eine Bohrung (8') im Innenbereich der Plattenfläche,
b2) die beiden Platten (11, 11') sind entlang ihrem Umfang druckfest miteinander verbunden;
c) die Innenflächen des Druckgefäßes (1) sind mit den Druckkissen (2) in der Weise abgedeckt, daß die Bohrungen (8') in den Platten der Druckkissen auf den Bohrungen (8) in den sechs Wandflächen des Innenraums des Druckgefäßes gegenüber dem Innenraum abgedichtet aufliegen;
d) jeweils zwei gegenüberliegende Druckkissen (2) stehen über deren Bohrungen (8') und die entsprechenden Bohrungen (8) im Druckgefäß (1) mit einer Vorrichtung (3) in Verbindung, mit deren Hilfe ein Medium unter Druck zwischen die Platten (11, 11') der Druckkissen eingepreßt werden kann.

2. Prüfeinrichtung nach Anspruch 1, dadurch gekennzeichnet, daß die Druckkissen auf den Wandflächen des kubischen Innenraums des Druckgefäßes in einer Weise aufgeklebt sind, daß die beiden aufeinanderliegenden Bohrungen (8, 8') gegenüber dem kubischen Innenraum abgedichtet sind.

3. Prüfeinrichtung nach Anspruch 1, dadurch gekennzeichnet, daß das Druckgefäß (1) heizbar und/oder thermostatisierbar ist.

4. Prüfeinrichtung nach Anspruch 1, dadurch gekennzeichnet, daß das Medium, das unter Druck zwischen die Platten der Druckkissen eingepreßt wird, eine Hydraulikflüssigkeit ist.

5. Prüfeinrichtung nach Anspruch 4, dadurch gekennzeichnet, daß die Zwischenräume der Platten von jeweils zwei gegenüberliegenden Druckkissen über deren Bohrungen und die entsprechenden Bohrungen im Druckgefäß mit einem Behälter (3) in Verbindung stehen, der mit der Hydraulikflüssigkeit befüllbar ist und eine kalibrierte Füllstandsmeßvorrichtung enthält.

6. Prüfeinrichtung nach Anspruch 1, dadurch gekennzeichnet, daß auf den nicht durchbohrten Platten (11) der sechs Druckkissen jeweils ein quadratisches Flächenelement (12, 12') mit abgerundeten Ecken mit einer Quadratseitenlägen a'', die geringfügig kleiner ist als die Quadratseitenläge a', aufliegt, das gegen Durchbiegen versteift ist.

7. Prüfeinrichtung nach Anspruch 6, dadurch gekennzeichnet, daß das Flächenelement (12) aus einer Hartstahlplatte besteht.

8. Prüfeinrichtung nach Anspruch 6, dadurch gekennzeichnet, daß das Flächenelement (12′) aus den folgenden Komponenten zusammengesetzt ist:
a) einer Deckplatte (13), die auf dem Druckkissen (2) aufliegt,
b) einer Lage von Kugellagerkugeln (14) in einer käfigartigen Matrix (15) aus Gummi oder gummiähnlichem Material, die auf der Deckplatte (13) aufliegt,
c) verschiebbaren Teilelementen (16), die sich teilweise dachziegelartig überlappen und in solchem Abstand auf der Schicht der Kugellagerkugeln (14) aufliegen, daß sie sich auf dieser Schicht ohne gegenseitige Behinderung bewegen lassen,
d) eine elastische, gummiartige Schicht (17), die die Teilelemente (16) und die sie stützenden Kugellagerkugeln (14) abdeckt und die an den Rändern der Deckplatte (18) fixiert wird.

## Claims

1. Testing means for determining the behaviour of granular material under triaxial loading, wherein the granular material is subjected to various pressures in different spatial directions, having
a) a detachable pressure vessel (1) having a cubic interior (9) with the edge length a and six bores (8), which each extend from a point in the internal region of the wall surfaces of the cubic interior to the external surface of the pressure vessel (1);
characterised by
b) six pressure pads (2), comprising two square plates (11, 11'), which lie one above the other and are provided with rounded corners, said plates being formed from a material, which is deformable in a resiliently plastic manner, and having a lateral length a' which is slightly smaller than the edge length a;
b1) one of the two plates (11') contains a bore (8') in the internal region of the plate surface,
b2) the two plates (11, 11') are interconnected in a pressure-resistant manner along their periphery;
c) the internal surfaces of the pressure vessel (1) are covered with the pressure pads (2) in such a manner that the bores (8') in the plates of the pressure pads lie on the bores (8) in the six wall surfaces of the interior of the pressure vessel so as to be sealed relative to the interior;
d) two oppositely situated pressure pads (2) at a time communicate with a device (3) via their bores (8') and the corresponding bores (8) in the pressure vessel (1), said device permitting a medium to be urged under pressure between the plates (11, 11') of the pressure pads.

2. Testing means according to claim 1, characterised in that the pressure pads are adhered to the wall surfaces of the cubic interior of the pressure vessel in such a manner that the two bores (8, 8'), situated one above the other, are sealed relative to the cubic interior.

3. Testing means according to claim 1, characterised in that the pressure vessel (1) is heatable and/or thermostatically controllable.

4. Testing means according to claim 1, characterised in that the medium, which is urged under pressure between the plates of the pressure pads, is a hydraulic fluid.

5. Testing means according to claim 4, characterised in that the cavities in the plates of two respective oppositely situated pressure pads communicate with a container (3) via their bores and the corresponding bores in the pressure vessel, which container can be filled with the hydraulic fluid and contains a calibrated filling level measuring device.

6. Testing means according to claim 1, characterised in that a square surface element (12, 12'), provided with rounded corners and having a lateral length a'', which is slightly smaller than the lateral length a', rests on each of the boreless plates (11) of the six pressure pads, and said surface element is reinforced to prevent deflection.

7. Testing means according to claim 6, characterised in that the surface element (12) comprises a hard steel plate.

8. Testing means according to claim 6, characterised in that the surface element (12') includes the following components:
a) a top plate (13), which lies on the pressure pad (2),
b) a layer of ball-bearing balls (14) in a cage-like matrix (15), which is formed from rubber or rubber-like material and lies on the top plate (13),
c) displaceable partial elements (16), which partially overlap one another in the manner of roofing tiles and lie on the layer of ball-bearing balls (14) with such a spacing therebetween that they can move on this layer without hindering one another,
d) a resilient, rubber-like layer (17), which covers the partial elements (16) and the ball-bearing balls (14) supporting same, and which is secured on the edges of the top plate (18).

## Revendications

1. Dispositif d'essai pour la détermination du comportement d'un matériau granuleux sous charge triaxiale, dans lequel le matériau granuleux est exposé à des pressions différentes dans des directions spatiales différentes avec :
a) un récipient de pression (1) démontable avec un espace interne (9) cubique de longueur d'arête a et six perçages (8) qui respectivement conduisent d'une point dans la zone intérieure des surfaces de paroi de l'espace intérieur cubique, à la surface externe du récipient de pression (1)
caractérisé par,
b) six coussins de pression formés de deux plaques carrées superposées (11) (11') pourvues d'angles arrondis, en matériau déformable élastiquement, plastiquement, ayant une longueur de côté du carré a' qui est légèrement plus petite que la longueur de l'arête a.
b1) une des deux plaques (11') contient un perçage (8') dans la zone interne des surfaces de plaque.
b2) les deux plaques (11) (11') sont reliées l'une avec l'autre d'une manière résistante à la compression le long de leur pourtour.
c) les surfaces internes du récipient de pression (1) sont recouvertes des coussins de pression (2) de manière que les perçages (8') dans les plaques des coussins de pression appuyent sur les perçages (8) des six surfaces de paroi de l'espace interne du récipient de pression, d'une manière étanche vis à vis de l'espace interne,
d) respectivement deux coussins de pression (2) opposés entrent en liaison par l'intermédiaire de leurs perçages (8') et les perçages correspondants (8) dans le récipient de pression (1) avec un dispositif (3), à l'aide duquel un milieu peut être injecté sous pression

2. Dispositif d'essai selon la revendication 1, caractérisé en ce que les coussins de pression sont encollés sur les surfaces de paroi de l'espace interne cubique du récipient de pression, de manière que les deux perçages disposés l'un sur l'autre (8) (8 ') sont rendus étanches vis à vis de l'espace interne cubique.

3. Dispositif d'essai selon la revendication 1, caractérisé en ce que le récipient de pression (1) est chauffable et/ou rendu thermostatique.

4. Dispositif d'essai selon la revendication 1, caractérisé en ce que le milieu qui est comprimé sous pression entre les plaques des coussins de pression, est un liquide hydraulique.

5. Dispositif d'essai selon la revendication 4 caractérisé en ce que l'espace intermédiaire des plaques de respectivement deux coussins de pression opposés sont en liaison par leurs perçages et les perçages correspondants du récipient de pression avec un récipient (3) qui peut être rempli du liquide hydraulique et qui contient un dispositif de mesure de remplissage calibré.

6. Dispositif d'essai selon la revendication 1, caractérisé en ce que sur les plaques qui n'ont pas été transpercées (11) des six coussins de pression on a disposé un élément de surface carré (12, 12') ayant des angles arrondis et ayant des longueurs de côtés carrés a'', qui sont légèrement plus petit que les longueurs de côtés carrés a' et qui est renforcé contre le cintrage;

7. Dispositif d'essai selon la revendication 6, caractérisé en ce que l'élément de surface (12) est formé d'une plaque d'acier dur.

8. Dispositif d'essai selon la revendication 6, caractérisé en ce que l'élément de surface (12') est composé des composants suivants :
a) une plaque de couverture (13) qui repose sur les coussins de pression (2),
b) une couche de billes de roulement à billes (14) dans une matrice (15) du type cage en caoutchouc ou en matériau du type caoutchouc qui repose sur la plaque de couverture.
c) des éléments partiels (16) mobiles, qui se recouvrent partiellement à la manière de tuiles et qui reposent à une distance telle sur la couche de billes de roulement à bille (14) qu'ils peuvent se déplacer sur cette couche sans empêchement réciproque.
d) une couche (17) élastique du type caoutchouc qui recouvre les éléments partiels (16) et les billes de roulement à billes (14) les soutenant et qui est fixée sur les bords de la plaque de couverture (18)
